Europäisches Patentamt

European Patent Office

Office européen des brevets

(19)

(11) Veröffentlichungsnummer: **0 237 850 B1**

(12) **EUROPÄISCHE PATENTSCHRIFT**

(45) Veröffentlichungstag der Patentschrift: **10.07.91**

(51) Int. Cl.⁵: **G01F 23/04**, G01F 23/22, //G02B6/04

(21) Anmeldenummer: **87102838.7**

(22) Anmeldetag: **27.02.87**

(54) Faseroptischer Sensor für Flüssigkeitsstandanzeiger oder -niveauregler.

(30) Priorität: **03.03.86 DE 3606847**

(43) Veröffentlichungstag der Anmeldung:
**23.09.87 Patentblatt 87/39**

(45) Bekanntmachung des Hinweises auf die
Patenterteilung:
**10.07.91 Patentblatt 91/28**

(84) Benannte Vertragsstaaten:
**CH FR GB IT LI NL SE**

(56) Entgegenhaltungen:
**AT-B- 351 835**
**DE-A- 1 811 201**
**DE-A- 3 328 141**
**DE-A- 3 440 773**
**GB-A- 2 149 112**

(73) Patentinhaber: **Schott Glaswerke**
**Hattenbergstrasse 10**
**W-6500 Mainz(DE)CH FR IT LI NL SE**

Patentinhaber: **Carl-Zeiss-Stiftung trading as**
**SCHOTT GLASWERKE**
**Hattenbergstrasse 10**
**W-6500 Mainz 1(DE)GB**

(72) Erfinder: **Kriege, Wolfgang**
**Laubenheimer Strasse 33**
**W-6500 Mainz(DE)**

(74) Vertreter: **Dr. Fuchs, Dr. Luderschmidt**
**Dipl.-Phys. Seids, Dr. Mehler Patentanwälte**
**Abraham-Lincoln-Strasse 7**
**W-6200 Wiesbaden(DE)**

**Beschreibung**

Die Erfindung betrifft einen faseroptischen Sensor für Flüssigkeitsstandanzeiger oder -niveauregler, bestehend aus einem ersten, einem Lichtsender zugeordneten Bündel von Lichtleitfasern und einem zweiten, einem Lichtempfänger zugeordneten Bündel von Lichtleitfasern, wobei beide Bündel so angeordnet sind, daß deren der Flüssigkeit zugewandten Enden ein optisches Element derart bilden, daß die in die Lichtleitfasern des ersten Bündels eingekoppelten Lichtstrahlen an diesen Enden infolge Totalreflexion an einer ersten Grenzfläche Lichtleitfaser/Luft ein erstes Mal ungelenkt und danach infolge Totalreflexion an einer zweiten Grenzfläche Lichtleitfaser/Luft ein zweites Mal umgelenkt werden, wobei der Brechwert der Lichtleitfasern so auf die betreffende Flüssigkeit abgestimmt ist, daß beim Eintauchen in diese Flüssigkeit die Totalreflexion so stark vermindert wird, daß zwischen dem eingetauchten und nichteingetauchten Zustand ein elektronisch verwertbares Signal entsteht.

Sensoren für optische Flüssigkeitsstandanzeiger sind an sich bekannt (zum Beispiel aus der DE-A-18 11 201). Sie bestehen in der Regel aus zwei identischen, parallel zueinander angeordneten, massiven Stäben aus einem lichtleitenden Material.

Die der Flüssigkeit zugewandten Enden dieser Stäbe sind mit reflektierenden Grenzflächen versehen. Meist werden dazu die Stabenden prismatisch angeschliffen. In den einen Stab wird nun das von einer Lichtquelle kommende Licht eingekoppelt und dann nach zweimaliger Totalreflexion an den reflektierenen Grenzflächen durch den zweiten Stab einem Lichtempfänger zugeführt. Dabei ist hinsichtlich einer hohen Signalintensität die Aufteilung des Sensors in zwei identische Hälften von besonderer Bedeutung. Dadurch wird erreicht, daß das gesamte eingeleitete Licht im nichteingetauchten Zustand zunächst an der einen Grenzfläche umgelenkt und danach das gesamte, einmal umgeleitete Licht an der anderen Grenzfläche nochmals umgelenkt und dem Lichtempfänger zugeführt wird, woraus eine besonders hohe Signaldifferenz zwischen dem eingetauchten und dem nichteingetauchten Zustand resultiert. Aus der genannten DE-A-18 11 201 ist auch ein Flüssigkeitssensor bekannt, bei dem die beiden Stäbe jeweils durch ein Bündel von Lichtleitfasern ersetzt sind (vgl. die Figuren 12 und 13).

Ein weiterer Sensor für den optischen Flüssigkeitsstandanzeiger mit einem gänzlich anderen Aufbau ist aus der GB-A-21 49 112 bekannt. Dieser Sensor besteht aus einem einzigen massiven, im wesentlichen zylinderförmigen Stab. Der Stab ist in zwei Zonen aufgeteilt. Über eine äußere Umfangszone, die eine innere Kernzone umgibt, wird das Licht eingekoppelt. Die Zuleitung des Lichts zu einem Lichtempfänger erfolgt dann über die innere Kernzone. Das Stabende weist ebenfalls die Gestalt eines Prismas auf.

Nachteilig bei diesem Sensor ist, daß die massiven Stäbe aus lichtleitendem Material stärkeren mechanischen Beanspruchungen, wie sie zum Beispiel bei Ölstandsanzeigern für Motoren und Triebwerke auftreten, wohl nicht standhalten. Ein weiterer Nachteil ist die arbeitsaufwendige und kostspielige Fertigung der zum Teil kompliziert geformten Stäbe.

In der GB 21 49 112A wird ferner ein Sensor mit allen im Oberbegriff des Anspruchs 1 angegebenen Merkmalen beschrieben, der die obengenannten Nachteile nicht aufweist. Dieser Sensor unterscheidet sich von dem zuletzt beschriebenen nur dadurch, daß anstelle des massiven Zylinders mit den beiden verschiedenen Zonen zwei Lichtleitfaserbündel eingesetzt werden, welche jeweils die Aufgabe einer Zone übernehmen. Um ein zentrales Bündel von Lichtleitfasern, welches einem Lichtempfänger zugeordnet ist, sind die Lichtleitfasern des äußeren Bündel gruppiert. Über dieses äußere Bündel erfolgt die Lichteinkopplung, über das innere Bündel die Zuleitung des Lichts zu dem Lichtempfänger. Das der Flüssigkeit zugewandte Ende des Sensors weist ebenfalls eine prismatische Gestalt auf.

Dieser Sensor hat jedoch den Nachteil, daß die Signalintensität relativ gering ist. Es gelangt vor allem Streulicht zu dem Lichtempfänger. Ohne Streuverluste an den reflektierenden Grenzflächen kann nur ein Bruchteil des Lichts den Lichtempfänger erreichen, da die zweimal totalreflektierten Lichtstrahlen aufgrund der besonderen geometrischen Anordnung der lichtzu- und lichtableitenden Faserbündel teilweise wieder in das der Lichtquelle zugeordnete Bündel zurückgeworfen werden.

Der vorliegenden Erfindung liegt nun die Aufgabe zugrunde, einen faseroptischen Sensor zu schaffen, welcher die letztgenannten Nachteile des Stands der Technik überwindet.

Diese Aufgabe wird mit einem faseroptischen Sensor der eingangs genannten Art erfindungsgemäß dadurch gelöst, daß die dem Lichtsender zugeordneten Lichtleitfasern an dem der Flüssigkeit zugewandten Ende des Sensors willkürlich untereinander gemischt angeordnet sind und durch eine Verklebung miteinander verbunden sind. Die Verbindung von Lichtleitfasern durch eine Verklebung ist an sich allgemein üblich: vgl. beispielsweise die AT-B-3 51 830.

Es hat sich in überraschender Weise gezeigt, daß ohne die aus dem Stand der Technik bekannte strenge räumliche Trennung der lichtzu- und lichtableitenden Lichtleitfaserbündel an dem der Flüssigkeit zugewandten Ende des Sensors eine hohe Signalintensität erzielt werden kann. Der erfindungsgemäße Sensor ist dabei zumindest ebenso einfach und kostengünstig herzustellen, wie der aus der Figur 10 der GB-A-21 49 112 bekannte.

Das der Flüssigkeit zugewandte Ende des erfindungsgemäßen Sensors kann in an sich bekannter Weise die Gestalt eines Prismas aufweisen; auch andere geometrische Formen, wie beispielsweise ein Kegel oder eine Halbkugel können die reflektierenden Grenzflächen darstellen.

Gemäß einer weiteren bevorzugten Ausführungsform der Erfindung ist das der Flüssigkeit zugewandte Ende des Bündels von Lichtleitfasern in einem Metallrohr zusammengefaßt. Die Fassung von Lichtleitfasern in ein Metallrohr ist an sich aus der AT-B-3 51 835 bekannt.

Die Erfindung wird nachfolgend anhand der Zeichnungen näher erläutert; es stellt dar

Figur 1    einen Längsschnitt durch einen erfindungsgemäßen Sensor;

Figur 2a    eine stark vergrößerte Draufsicht von unten auf das Ende des Sensors aus Figur 1;

Figur 2b    und 2c stark vergrößerte Längsschnitte durch das Ende des Sensors aus Figur 1.

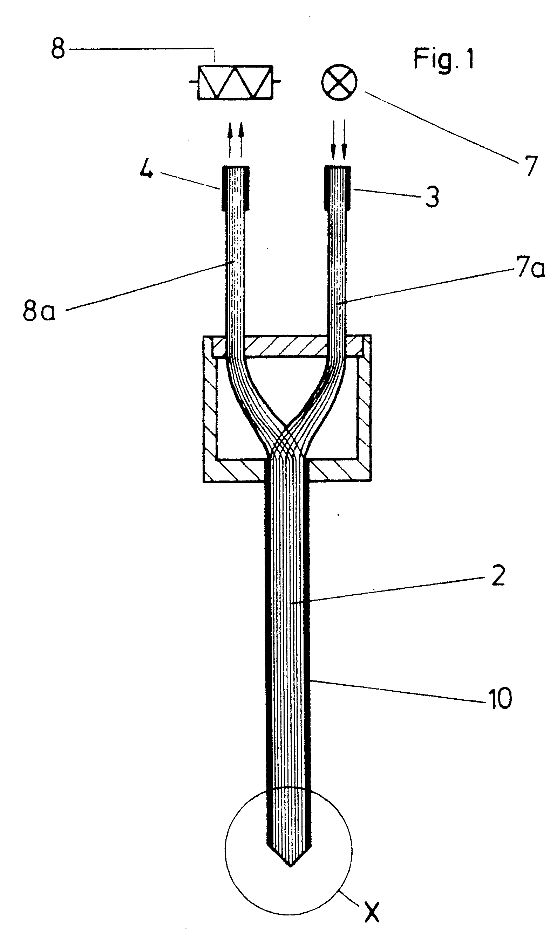

Wie Figur 1 zeigt, besteht der dort dargestellte faseroptische Sensor aus zwei Bündeln aus Lichtleitfasern 7a und 8a, die mit einem Lichteinkoppelende 3 und einem Lichtsender 7 beziehungsweise mit einem Lichtauskoppelende 4 und einem Lichtempfänger 8 versehen sind, und die einen Lichtleiter 2 bilden. Dieser Lichtleiter 2 ist von einem Metallrohr 10 umschlossen.

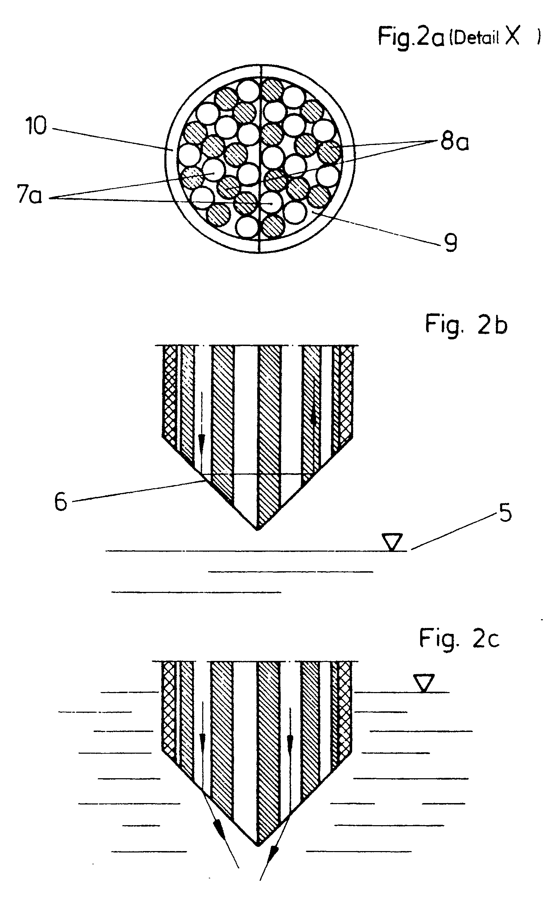

Wie Figur 2a erkennen läßt, sind die dem Lichtsender zugeordneten Fasern 7a und die dem Lichtempfänger zugeordneten Fasern 8a willkürlich angeordnet und durch einen Kleber 9 miteinander verbunden.

Figur 2b zeigt den Strahlenverlauf bei einem nicht in eine Flüssigkeit 5 eintauchenden Sensor, wobei der Lichtstrahl zweimal an den Grenzflächen 6 reflektiert wird.

Figur 2c zeigt den Strahlenverlauf bei einem in die Flüssigkeit eintauchenden Sensor.

## Ansprüche

1.  Faseroptischer Sensor, bestehend aus einem ersten, einem Lichtsender zugeordneten Bündel von Lichtleitfasern und einem zweiten, einem Lichtempfänger zugeordneten Bündel von Lichtleitfasern, wobei beide Bündel so angeordnet sind, daß deren der Flüssigkeit zugewandte Enden ein optisches Element derart bilden, daß die in die Lichtleitfasern des ersten Bündels eingekoppelten Lichtstrahlen an diesen Enden infolge Totalreflexion an einer ersten Grenzfläche Lichtleitfaser/Luft ein erstes Mal umgelenkt und danach infolge Totalreflexion an einer zweiten Grenzfläche Lichtleitfaser/Luft ein zweites Mal umgelenkt werden, wobei der Brechwert der Lichtleitfasern so auf die betreffende Flüssigkeit abgestimmt ist, daß beim Eintauchen in diese Flüssigkeit die Totalreflexion so stark vermindert wird, daß zwischen dem eingetauchten und nichteingetauchten Zustand ein elektronisch verwertbares Signal entsteht,

dadurch gekennzeichnet,

daß die dem Lichtsender (7) zugeordneten Lichtleitfasern (7a) und die dem Lichtempfänger (8) zugeordneten Lichtleitfasern (8a) an dem der Flüssigkeit zugewandten Ende des Sensors willkürlich untereinander gemischt angeordnet sind und durch eine Verklebung (9) miteinander verbunden sind.

2.  Sensor nach Anspruch 1, dadurch gekennzeichnet, daß die Lichtleitfasern (7a, 8a) zumindest an dem der Flüssigkeit (5) zugewandten Ende in ein Metallrohr (10) gefaßt sind.

## Claims

1.  A fibre-optic sensor composed of a first bundle of light-guiding fibres which is associated with a light transmitter and of a second bundle of light-guiding fibres which is associated with a light receiver, both bundles being arranged in such a manner that their ends turned towards the fluid form an optical element in such a way that at these ends the light rays bunched into the light-guiding fibres of the first bundle are deflected for a first time as a result of total reflection at a first light-guiding fibre/air boundary surface, and are subsequently deflected for a second time as a result of total reflection at a second light-guiding fibre/air boundary surface, the refractive power of the light-guiding fibres being suited to the fluid in question in such a manner that upon immersion into this fluid the total reflection is so greatly reduced that an electronically usable signal arises between the immersed and the non-immersed state, characterized in that at the sensor end turned towards the fluid, the light-guiding fibres (7a) associated with the light transmitter (7) and the light-guiding fibres (8a) associated with the light receiver (8) are arranged mixed with one another in a random manner and are connected to one another by an adhesion means (9).

2. A sensor in accordance with Claim 1, characterized in that at least at the end turned towards the fluid (5), the light-guiding fibres (7a, 8a) are inserted in a metal pipe (10).

**Revendications**

1. Capteur à fibres optiques, constitué par un premier faisceau de fibres optiques conjugue à un émetteur de lumière et par un deuxième faisceau de fibres optiques conjugué à un récepteur de lumière, les deux faisceaux étant agencés de manière que leurs extrémités tournées vers le liquide forment un élément optique tel que les rayons lumineux introduits dans les fibres optiques du premier faisceau soient déviés une première fois à ces extrémités, sous l'effet d'une réflexion totale sur une première interface fibre optique/air, puis soient déviés une deuxième fois par réflexion totale sur une deuxième interface fibre optique/air, l'indice de réfraction des fibres optiques étant adapté au liquide concerné de manière qu'en cas d'immersion dans ce liquide la réflexion totale soit diminuée si fortement qu'il y ait production, entre l'état immergé et l'état non immergé, d'un signal exploitable électroniquement,
caractérisé
par le fait qu'à l'extrémité du capteur tournée vers le liquide les fibres optiques (7a) conjuguées à l'émetteur de lumière (7) et les fibres optiques (8a) conjuguées au récepteur de lumière (8) sont disposées en étant arbitrairement mélangées les unes avec les autres et sont assemblées les unes aux autres par un collage (9).

2. Capteur selon revendication 1, caractérisé par le fait qu'au moins à l'extrémité tournée vers le liquide (5) les fibres optiques (7a, 8a) sont rassemblées dans un tube métallique (10).

EP 0 237 850 B1

Fig. 1

Fig.2a (Detail X )

10

8a

7a

9

Fig. 2b

6

5

Fig. 2c